# EUROPÄISCHE PATENTSCHRIFT

(11) **EP 1 519 339 B1**
(45) Veröffentlichungstag und Bekanntmachung des Hinweises auf die Patenterteilung: **14.02.2007**
(21) Anmeldenummer: 04104200.3
(22) Anmeldetag: 02.09.2004
(51) Int. Cl.: G08G 1/09, G01C 21/36

(54) **Verfahren zur Ausgabe von Verkehrsregeln und Fahrerinformationsvorrichtung**
Device for supplying traffic regulations and driver information system
Dispositif pour délivrer des codes de la route et système pour l'information des conducteurs

(30) Priorität: 23.09.2003 DE 10343941
(43) Veröffentlichungstag der Anmeldung: 30.03.2005
(73) Patentinhaber: ROBERT BOSCH GMBH, 70442 Stuttgart (DE)
(72) Erfinder: Kynast, Andreas, 31141, Hildesheim (DE); Rychlak, Stefan, 31241, Ilsede 12 (DE); Faenger, Jens, 06406, Bernburg (DE)

(56) Entgegenhaltungen:
- DE-A- 10 042 980
- DE-A- 19 821 585
- DE-A- 19 932 797
- US-A1- 2002 036 572
- US-A1- 2004 102 898

## Beschreibung

### Stand der Technik

Die Erfindung geht aus von einem Verfahren zur Ausgabe von Verkehrsregeln nach der Gattung des Hauptanspruchs. Es sind schon Anzeigen im Fahrzeug bekannt, z.B. Tachoanzeigen, bei denen eine Markierung aufgebracht ist, die auf eine zulässige Höchstgeschwindigkeit hinweist. Zur Kontrolle der Geschwindigkeit muss ein Fahrer des Fahrzeugs selbstständig einen Vergleich zwischen der Position der Tachonadel und der Position der Markierung vornehmen. Zudem sind auch Vorrichtungen bekannt, die einen Fahrer auf ein Überschreiten einer zulässigen Höchstgeschwindigkeit durch eine Warnanzeige hinweisen. Ferner sind Anzeigen im Fahrzeug bekannt, die auf eine Gurtanlegepflicht hinweisen. Ferner ist es bekannt, dass Fahrzeugsysteme, wie z.B. das Standlicht, in Ländern, in denen eine Fahrt stets mit Licht vorgeschrieben ist, automatisch eingeschaltet wird, wenn eine Zündung betätigt wird. Derartige Anpassungen und Warnhinweise sind jedoch auf dasjenige Land eingestellt, für das das jeweilige Fahrzeug verkauft wird. Eine Warnung bei einer Überschreitung einer Grenze bzw. einer Fahrt in ein anderes Land erfolgt nicht. Ein Fahrer ist daher darauf angewiesen, entweder die Verkehrsregeln in dem anderen Land zu kennen oder sich z.B. über geeignet angeordnete Tafeln am Straßenrand über die jeweiligen Verkehrsregeln zu informieren. Gegebenenfalls kann es jedoch dazu kommen, dass er Verkehrsregeln mangels Kenntnis dieser Verkehrsregeln missachtet. Dies kann empfindliche Strafen nach sich ziehen.

Die DE 198 21 585 A1 zeigt ein Verfahren zur Beeinflussung von Funktionen eines Kraftfahrzeugs. Hierbei wird der geografische Aufenthaltsort des Kraftfahrzeugs bestimmt. Aus dem gegenwärtigen Aufenthaltsort und unter Einbeziehung der aktuellen Zeit ist es möglich, aus einem fahrzeugseitig mitgeführten Datenspeicher für eine große Anzahl von Ländern und Straßenkategorien Informationen über die in dem betreffenden auf der aktuell befahrenen Straße jeweils gültigen Verkehrsbestimmungen dem Fahrer zur Verfügung zu stellen.

Die DE 100 42 980 A1 zeigt eine Einrichtung zur Bereitstellung von Informationen über die auf einem Streckenabschnitt jeweils geltenden Verkehrsregeln in einem Fahrzeug. Hierzu werden die auf dem jeweiligen Streckenabschnitt gültigen Verkehrsregeln mit Hilfe von Bilderfassungseinrichtungen optisch erfasst, verarbeitet und mit hinterlegten Referenzeichen abgeglichen, die anschließend in einer Anzeige dargestellt werden. Ergänzend kann ein Speicher eines sogenannten Navigationssystems vorgesehen sein, um erfasste Ortsnamen und Karteninformationen abzugleichen.

Gemäß der US 2002/0036572 A1 wird ein Fahrer über einen möglichen, von ihm vorgenommenen Verkehrsverstoß informiert.

### Vorteile der Erfindung

Das erfindungsgemäße Verfahren zur Ausgabe von Verkehrsregeln und die erfindungsgemäße Fahrerinformationsvorrichtung mit den Merkmalen der nebengeordneten Ansprüche haben demgegenüber den Vorteil, dass bei einem Überschreiten einer Ländergrenze von einem ersten zu einem zweiten Land ein Fahrer nur auf diejenigen Verkehrsregeln hingewiesen wird, die sich in den beiden Ländern unterscheiden und bei denen ein Fahrer vor oder mit Überschreiten der Ländergrenze Änderungen an seinem Fahrzeug in irgendeiner Weise vornehmen muss. Hierdurch wird der Fahrer über ab der Grenze wirksame Änderungen von Verkehrsregeln informiert, so dass er sein Fahrverhalten auf das andere Land einstellen kann und gegebenenfalls notwendige Eingriffe am Fahrzeug noch rechtzeitig vor dem Grenzübertritt vornehmen kann. Eine Missachtung von Verkehrsregeln aus Unwissenheit kann hierdurch ausgeschlossen werden. Selbst bei einem Überschreiten einer Grenze, auf die gegebenenfalls nicht durch geeignete Schilder deutlich hingewiesen wird, wird ein Fahrer über die zu beachtenden, anderen Verkehrsregeln informiert.

Erfindungsgemäß werden nur diejenigen Verkehrsregeln auszugeben, die einen Eingriff des Fahrers vor oder mit Überschreiten der Ländergrenze erforderlich machen. Dies kann z.B. eine Entrichtung einer Straßenbenutzungsgebühr in elektronischer Form oder durch den Erwerb eines Aufklebers für das Fahrzeug sein. Ein solcher Eingriff kann jedoch auch Maßnahmen wie z.B. das teilweise Abkleben eines Scheinwerfers bei einem Wechsel von Rechtsverkehr auf Linksverkehr umfassen. Hierbei ist besonders vorteilhaft, dass die Verkehrsregeln so rechtzeitig ausgegeben werden, dass ein Benutzer notwendige Änderungen am Fahrzeug noch rechtzeitig vor einem Grenzübertritt vornehmen kann, z.B. durch Anfahren eines Parkplatzes. Entsprechend kann er sich bereits vor dem Grenzübertritt auf geänderte Verkehrsregeln einstellen.

Durch die in den Unteransprüchen aufgeführten Maßnahmen sind vorteilhafte Weiterbildungen und Verbesserungen des im Hauptanspruch angegebenen Verfahrens und der erfindungsgemäßen Fahrerinformationsvorrichtung möglich.

Ferner ist vorteilhaft, zu den Verkehrsregeln Strafmaßnahmen abzulegen, mit denen Überschreitungen der Verkehrsregeln in dem jeweiligen Land geahndet werden. Hierdurch kann gegebenenfalls auf Verkehrsregeln hingewiesen werden, die in dem jeweiligen Land mit einer besonders hohen Strafe geahndet werden. Dadurch kann die Bereitschaft des Fahrers erhöht werden, diesen Verkehrsregeln Folge zu leisten. Die gespeicherten Strafmaßnahmen können auch dazu verwendet werden, eine Ausgabe der Verkehrsregeln zu ordnen. Hierbei werden zuerst diejenigen, geänderten Verkehrsregeln ausgegeben, deren Überschreitung mit besonders hohen Strafmaßnahmen geahndet wird.

Besonders vorteilhaft ist ferner, an der Fahrerinformationsvorrichtung eine Schnittstelle zur Ansteuerung von weiteren Fahrzeugkomponenten gemäß den jeweiligen Verkehrsregeln vorzusehen. Hierdurch kann z.B. in einem Land, in dem die Benutzung einer Video- bzw. Fernsehereinrichtung während der Fahrt verboten ist, diese automatisch deaktiviert werden, wenn sich das Fahrzeug dort bewegt.

Ferner ist es vorteilhaft, dass die Fahrerinformationsvorrichtung eine Warneinheit aufweist, die auf eine Überschreitung einer Verkehrsregel hinweist, wenn eine solche Überschreitung erfasst wird. Hierdurch kann zusätzlich zu der Ausgabe der Verkehrsregeln eine automatische Überwachung durchgeführt werden, ob der Fahrer die Verkehrsregeln auch beachtet. Insbesondere in dem Fall, dass das Fahrzeug nach einem Grenzübertritt abgestellt und erneut benutzt wird, könnte es vorkommen, dass ein Fahrer bei einem Start des Fahrzeugs sich zunächst nicht an die in dem Land geltenden Verkehrsregeln erinnert. Durch die Warneinheit wird er gegebenenfalls bei einem Überschreiten einer entsprechenden Verkehrsregel auf diese Verkehrsregel automatisch hingewiesen.

Ferner ist es vorteilhaft, an der Fahrerinformationsvorrichtung eine Funkschnittstelle zum Aktualisieren der gespeicherten Verkehrsregeln vorzusehen. Damit kann der Datenbestand im Fahrzeug bei entsprechenden Änderungen der Verkehrsregeln angepasst werden.

### Zeichnung

Ausführungsbeispiele der Erfindung sind in der Zeichnung dargestellt und in der nachfolgenden Beschreibung näher erläutert. Es zeigen
Figur 1 eine erfindungsgemäße Fahrerinformationsvorrichtung zur Ausgabe von Verkehrsregeln,
Figur 2 ein Ausführungsbeispiel für einen Verfahrensablauf zur Ausgabe von Verkehrsregeln und
Figur 3 einen Verfahrensablauf zur Ausgabe einer Warnung bei einem Überschreiten einer Verkehrsregel.

### Beschreibung des Ausführungsbeispiels

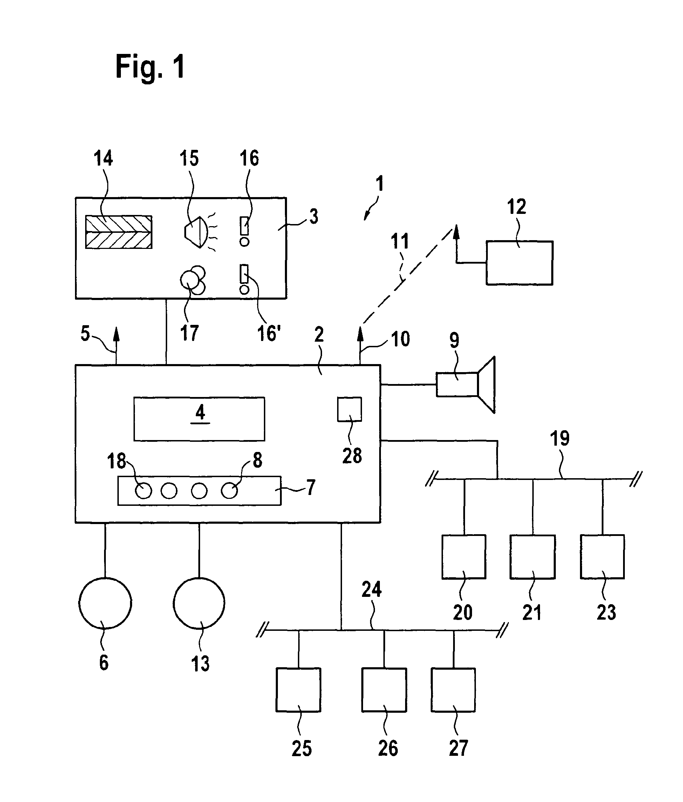

In der Figur 1 ist eine Fahrerinformationsvorrichtung 1 dargestellt, die eine Zentraleinheit 2 aufweist, an die eine Anzeige 3 angeschlossen ist. Die Zentraleinheit 2 weist eine Recheneinheit 4 auf, die zur Steuerung der Funktionen der Fahrerinformationsvorrichtung 1 dient. Die Zentraleinheit 2 ist ferner mit einer Ortungseinheit 5 verbunden, die eine Position des Fahrzeugs insbesondere über eine Satellitenortung bestimmt. Zur Positionsbestimmung greift die Zentraleinheit 2 auf einen ersten Speicher 6 zu, in dem Kartendaten gespeichert sind. Mittels der über die Ortungseinheit 5 bestimmten Position ermittelt so die Recheneinheit 4 der Zentraleinheit 2 durch Zugriff auf die Kartendaten eine Position des Fahrzeugs, in dem die Fahrerinformationsvorrichtung 1 angeordnet ist, in einem Straßennetz. Die Zentraleinheit 2 weist ferner eine Bedieneinheit 7 auf, die in einer bevorzugten Ausführung dazu dient, ein Fahrziel in die Zentraleinheit 2 einzugeben. Die Bedieneinheit 7 weist hierzu Bedienelemente 8 auf. Die Recheneinheit 4 berechnet eine Fahrtroute von der aktuellen Position des Fahrzeugs, die über die Ortungseinheit 5 bestimmt wird, zu dem über die Bedieneinheit 7 eingegebenen Fahrziel. Über die Anzeige 3 und/oder über einen Lautsprecher 9 werden Fahranweisungen zum Fahren entlang der berechneten Fahrtroute an einen Fahrer ausgegeben. In einer bevorzugten Ausführungsform ist die Anzeige 3 als eine Anzeige in der Mittelkonsole oder an einer anderen Stelle der Instrumententafel im Blickbereich des Fahrers ausgeführt. Die Anzeige 3 kann jedoch auch z.B. als ein sogenanntes Head-Up-Display ausgeführt sein oder in geeigneter Weise in ein Kombiinstrument zur Anzeige einer Vielzahl von Fahrzeuggrößen eingebracht sein.

In einer weiteren Ausführungsform kann die Fahrerinformationsvorrichtung 1 auch derart ausgeführt sein, dass über die Anzeige 3 lediglich eine Position des Fahrzeugs in einer Karte dargestellt wird. In einer bevorzugten Ausführungsform weist die Zentraleinheit 2 ferner eine Funkschnittstelle 10 auf, mit der eine Funkverbindung 11 zu einer externen Dienstezentrale 12, bevorzugt über ein Mobilfunknetz und/oder ein Datennetz hergestellt wird. In dieser Ausführungsform wird die Fahrtroute in der Dienstezentrale 12 berechnet und über die Funkverbindung 11 an die Fahrerinformationsvorrichtung 1 übertragen.

Die Recheneinheit 4 bestimmt nicht nur die Position des Fahrzeugs in dem Straßennetz, sondern bestimmt auch unter Zugriff auf die Kartendaten in dem ersten Speicher 6, in welchem Land sich das Fahrzeug befindet. Insbesondere ist die Recheinheit 4 dazu ausgelegt zu registrieren, wenn das Fahrzeug eine Grenze von einem ersten Land in ein zweites Land überschreitet und/oder wenn es sich an diese Grenze annähert. In einer bevorzugten Ausführungsform ist die Fahrerinformationsvorrichtung 1 dazu ausgelegt, die Annäherung an eine Grenze bzw. ein wahrscheinliches Überschreiten der Grenze zu einem zweiten Land zu erkennen. Hierzu wird beispielsweise eine Annäherung an eine Grenze auf einer Straße, die zu der Grenze führt, von mehr als drei Kilometern an die Grenze als eine mögliche Überschreitung der Grenze ermittelt.

Wird die Grenze von einem ersten Land in ein zweites Land nun überschritten bzw. nähert sich das Fahrzeug z.B. im Abstand von einem Kilometer, an die Grenze an, so greift die Recheneinheit 4 auf einen zweiten Speicher 13 zu, in dem Verkehrsregeln für das erste Land und für das zweite Land abgelegt sind. Die Recheneinheit 4 führt einen Vergleich zwischen den Verkehrsregeln, die in dem ersten Land gelten, und den Verkehrsregeln durch, die in dem zweiten Land gelten. Unterscheiden sich Verkehrsregeln, insbesondere solche Verkehrsregeln, bei denen ein Fahrer Änderungen an seinem Fahrzeug in irgendeiner Weise vornehmen muss, so werden diese unterschiedlichen Verkehrsregeln über die Anzeige 3 und/oder den Lautsprecher 9 vor oder mit Überschreiten der Grenze ausgegeben. Ein Fahrer kann somit rechtzeitig auf die geänderten Verkehrsregeln reagieren.

Ferner ist es auch möglich, das in der Navigationsvorrichtung ein Heimatland des Fahrzeugs gespeichert wird. Bei einem Anlassen des Fahrzeugs wird überprüft, ob sich das Fahrzeug in dem Heimatland befindet. Ist dies der Fall, so werden keine gesonderten Hinweise auf Verkehrsregeln ausgegeben. Wird dagegen festgestellt, dass sich das Fahrzeug nicht in seinem Heimatland befindet, so werden bei dem Anlassen des Fahrzeugs Hinweise auf die in dem vorliegenden Land gegenüber dem Heimatland anderen Verkehrsregeln ausgegeben. Hierdurch wird sichergestellt, dass ein Fahrer nach einem Starten des Fahrzeugs die jeweils geltenden Verkehrsregeln beachtet. Insbesondere ist es vorteilhaft, wenn sich der Fahrer in einem Land befindet, in dem z. B. Linksverkehr vorgesehen ist, während der Fahrer sonst in einem Land mit Rechtsverkehr fährt. Indem der Fahrer bei einem Anlassen des Fahrzeugs darauf hingewiesen wird, dass er den Linksverkehr beachten muss, können gefährliche Fahrsituationen, bei der der Fahrer sich für eine falsche Straßenseite entscheiden könnte, vermieden werden. Ein Benutzer kann eine Ausgabe dieser Hinweise bevorzugt auch deaktivieren, z.B. wenn er sich bereits längere Zeit in dem jeweiligen Land aufhält.

In einer ersten Ausführungsform sind sowohl für den ersten Speicher 6 als auch für den zweiten Speicher 13 jeweils ein Datenträger vorgesehen, z.B. eine CD-ROM. Statt zwei verschiedener Datenträger können die Daten auch gemeinsam auf einem Datenträger gespeichert sein. Entsprechend können auch andere Datenspeicher, z.B. Speicherkarten, in der Fahrerinformationsvorrichtung 1 vorgesehen sein. In einer weiteren Ausführungsform können die Verkehrsregeln des zweiten Landes auch über die Funkschnittstelle 10 von einer Dienstezentrale 12 angefordert werden. In einer weiteren, bevorzugten Ausführungsform ist zumindest der zweite Speicher 13 als ein überschreibbarer Datenspeicher ausgeführt. Die Zentraleinheit 2 kann in diesem Fall eine Aktualisierung der in dem zweiten Speicher 13 abgelegten Verkehrsregeln über die Funkverbindung 11 von der Dienstezentrale 12 anfordern. Die Dienstezentrale 12 überträgt die aktualisierten Verkehrsregeln an die Zentraleinheit 2, so dass die geänderten Verkehrsregeln in dem zweiten Speicher 13 abgelegt werden können.

In einer weiteren Ausführungsform können in dem zweiten Speicher 13 auch Strafmaßnahmen abgelegt sein, die in einem jeweiligen Land zu trage kommen, wenn ein Verstoß gegen eine der Verkehrsregeln festgestellt wird. Ein Hinweis auf eine entsprechende Strafmaßnahme kann zusammen mit dem Hinweis auf die Verkehrsregel über die Anzeige 3 oder den Lautsprecher 9 ausgegeben werden.

In der Anzeige 3 ist eine beispielhafte optische Ausgabe von Hinweisen auf Verkehrsregeln gegeben. In der Anzeige 3 ist eine Flagge 14 dargestellt, die ein Symbol für das Land ist, in das sich das Fahrzeug hineinbewegt hat oder in Kürze hineinbewegen wird. Ferner ist ein erstes Symbol 15 dargestellt, das einen Scheinwerfer darstellt. Dieses Symbol steht dafür, dass in dem Land stets mit Abblendlicht gefahren werden muss. Ein ergänzendes Warnsignal 16 ist neben dem ersten Symbol 15 angeordnet. Ferner ist ein zweites Symbol 17 in der Anzeige 3 dargestellt, das Münzen bezeichnet. Das zweite Symbol 17 weist auf eine in dem Land zu entrichtende Straßenbenutzungsgebühr hin. Das zweite Symbol ist ebenfalls durch ein Warnsymbol 16' ergänzt. Die zu entrichtende Straßengebühr kann einerseits eine elektronisch zu buchende, im voraus für eine bestimmte Strecke zu bezahlende Gebühr sein, die z.B. über eine im Fahrzeug befindliche Elektronikeinheit gebucht werden muss. Ferner ist es auch möglich, die Strecke an einem externen Terminal zu buchen oder über die Funkverbindung 11 von einer Dienstezentrale abzufragen. Ferner kann der Hinweis auf Straßenbenutzungsgebühren sich auch auf einen Aufkleber beziehen, der am Fahrzeug befestigt werden muss, bevor z.B. Schnellstraßen und/oder Autobahnen in dem Land befahren werden dürfen.

Ergänzend zu der optischen Darstellung der Hinweise können entsprechende Hinweise auf geänderte Verkehrsregeln auch über den Lautsprecher, bevorzugt automatisch, akustisch ausgegeben werden. So kann z.B. bei einer akustischen Ausgabe zugehörig zu der Darstellung in der Anzeige 3 gemäß der Figur 1 zunächst der Landesname genannt werden, dann der Hinweis, stets mit Abblendlicht zu fahren und drittens der Hinweis, die Straßennutzungsgebühr z.B. in Form eines Aufklebers, der auf das Fahrzeug anzubringen ist, zu entrichten.

Der Abstand, ab dem vor Überschreiten einer Grenze auf geänderte Verkehrsregeln hingewiesen wird, ist bevorzugt über die Bedieneinheit 7 der Fahrerinformationsvorrichtung 1 einstellbar. Ferner ist der automatische Hinweis auf geänderte Verkehrsregeln über ein Bedienelement 18 der Bedieneinheit 7 deaktivierbar. Hierdurch kann z.B. ein Pendler, der eine Landesgrenze täglich überquert, den automatischen Hinweis auf die Verkehrsregeln deaktivieren, da er aufgrund seiner täglichen Fahrt mit den Verkehrsregeln in beiden Ländern bereits vertraut ist.

Zusätzlich zu einer Ausgabe der Verkehrsregeln ist in einer bevorzugten Ausführungsform eine Überwachung der Einhaltung der Verkehrsregeln vorgesehen. Hierzu greift die Zentraleinheit 2 auf einen ersten Datenbus 19 zu, an den Sensoren zur Überwachung von Fahrzeuggrößen angeschlossen sind. Ein erster Sensor 20 dient dazu, zu überwachen, ob das Licht des Fahrzeugs eingeschaltet ist. Ein zweiter Sensor 21 dient zur Überwachung der Fahrzeuggeschwindigkeit. Eine Schnittstelle 23 dient zur Überwachung einer im Fahrzeug vorhandenen Einheit zur Entrichtung von Straßenbenutzungsgebühren. Anhand des ersten Sensors wird überprüft, ob gegebenenfalls einer Verpflichtung nachgekommen wird, in einem Land überall oder zumindest auf bestimmten Straßenklassen das Fahrlicht einzuschalten. Über den zweiten Sensor 21 wird überprüft, ob eine zulässige Höchstgeschwindigkeit eingehalten wird. In einer besonderen Ausführungsform wird über eine Ortung mittels der Ortungseinheit 5 und dazugehörenden Kartendaten in dem ersten Speicher 6 überprüft, auf welcher Straßenklasse sich das Fahrzeug in dem jeweiligen Land bewegt. Damit ist eine Höchstgeschwindigkeitsüberwachung entsprechend der gerade befahrenen Straßenklasse möglich. Durch Zugriff auf die Schnittstelle 23 zu der Mautüberwachungseinheit wird überprüft, ob für eine Strecke, auf der sich das Fahrzeug gerade bewegt, gegebenenfalls eine Straßenbenutzungsgebühr entrichtet worden ist. Die Mautüberwachungseinheit ist hierbei entweder als ein Kontrollgerät im Fahrzeug oder als eine Funkschnittstelle zu einer Datenzentrale zur Mauterfassung ausgeführt. Wird ein Verstoß gegen eine der Verkehrsregeln mittels der Sensoren bzw. Schnittstellen 20, 21, 23 festgestellt, wird eine Warnung über die Anzeige 3 und/oder den Lautsprecher 9 ausgegeben. Die Sensoren können auch unmittelbar an die Zentraleinheit 2 angeschlossen sein. Ferner können noch weitere Sensoren mit der Zentraleinheit 2 verbunden sein.

In einem weiteren Ausführungsbeispiel ist die Zentraleinheit 2 mit einem zweiten Datenbus 24 verbunden, mit dem sie auf Fahrzeugkomponenten zugreifen kann. Hierdurch kann sie gegebenenfalls derartige Einstellungen am Fahrzeug vornehmen, dass den Verkehrsregeln in dem jeweiligen Land genüge getan wird. Über den zweiten Datenbus 24 kann sie z.B. auf eine Fahrzeugbeleuchtung 25 zugreifen, die dann unabhängig von einer Benutzereinstellung und unabhängig von der Helligkeit, in der sich das Fahrzeug bewegt, aktiviert wird, wenn die jeweiligen Verkehrsregeln des Landes eine entsprechende Aktivierung der Fahrzeugbeleuchtung fordern. Ferner kann die Zentraleinheit 2 über den zweiten Datenbus 24 auf einen Geschwindigkeitsbegrenzer 26 zugreifen, durch den die Höchstgeschwindigkeit des Fahrzeugs auf die in dem jeweiligen Land erlaubte Höchstgeschwindigkeit geregelt wird. Ein Überschreiten dieser Höchstgeschwindigkeit wird somit automatisch unterbunden. Über den zweiten Datenbus 24 kann die Zentraleinheit 2 auch auf ein Multimediaausgabegerät 27 im Fahrzeug zugreifen. Ist es in einem Land verboten, derartige Multimediageräte während der Fahrt zu benutzen, so wird das entsprechende Multimediaausgabegerät 27 deaktiviert, sobald sich das Fahrzeug bewegt und/oder sobald die Zündung aktiviert wurde. Unter einem derartigen Multimediaausgabegerät 27 ist insbesondere eine Vorrichtung zur Wiedergabe von Videobilddaten zu verstehen, z.B. ein DVD-Player oder ein Video-Recorder. Ferner ist es in einigen Ländern auch nicht zugelassen, die Zieleingabe in ein Navigationssystem während der Fahrt vorzunehmen. Entsprechend wird die Bedieneinheit 7 der Fahrerinformationsvorrichtung 1 entsprechend während der Fahrt deaktiviert.

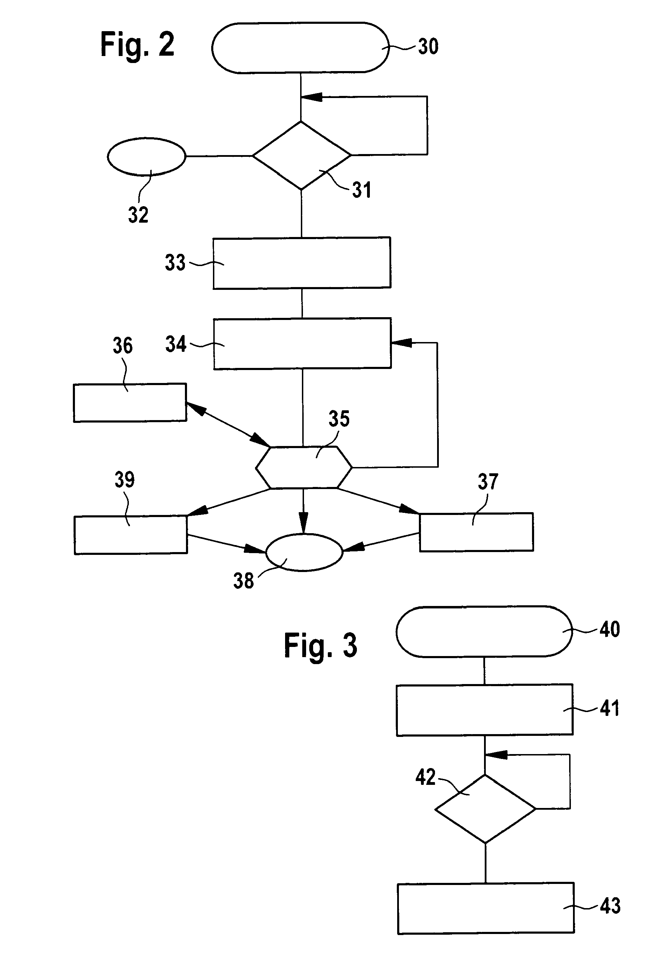

In der Figur 2 ist ein Ablauf eines Verfahrens zur Ausgabe von Verkehrsregeln dargestellt. Das Verfahren wird mit einem Initialisierungsschritt 30 begonnen, der eingeleitet wird, wenn sich das Fahrzeug z.B. in einem Abstand von 20 km einer Grenze nähert. In einem anschließenden, ersten Prüfschritt 31 wird überprüft, ob ein Grenzübertritt erfolgt ist oder kurz bevorsteht. Ist dies nicht der Fall, so wird zu dem ersten Prüfschritt 31 zurückverzweigt. Hat sich das Fahrzeug wieder weiter von der Grenze entfernt, so wird das Verfahren in einem Endschritt 32 beendet. Wird dagegen eine kurz bevorstehende Grenzüberschreitung erfasst, so wird zu einem ersten Ermittlungs- und Ausgabeschritt 33 verzweigt, in dem ein Fahrer auf eine bevorstehende Überschreitung einer Grenze hingewiesen wird. Zudem wird ein Vergleich zwischen den Verkehrsregeln in dem Land, in dem sich das Fahrzeug aktuell befindet, und in dem Land vorgenommen, in das das Fahrzeug hineinfahren wird. In einem anschließenden zweiten Ausgabeschritt 34 werden diejenigen Verkehrsregeln des zweiten Landes ausgegeben, in das das Fahrzeug hineinfährt, die sich gegenüber dem Land ändern, in dem sich das Fahrzeug noch befindet. Bevorzugt sind die Verkehrsregeln mit einer Priorisierung versehen, so dass in der Anzeige zunächst besonders wichtige Änderungen angezeigt werden. In einer bevorzugten Ausführungsform werden zunächst nur allgemeine Begriffe angezeigt, z.B. "Höchstgeschwindigkeit", "Lichtregelung" bzw. "Straßenbenutzungsgebühr". In einem anschließenden Auswahlschritt 35 besteht nun die Möglichkeit für den Fahrer, sich detaillierter zu informieren. Der Fahrer kann zu einem dritten Ausgabeschritt 36 umschalten, in dem Details der geänderten Verkehrsregeln angezeigt werden. Z.B. werden die Höchstgeschwindigkeiten nach einzelnen Straßen und/oder Fahrzeugklassen aufgegliedert. Ferner werden z.B. die Straßennutzungsgebühren dahingehend aufgegliedert, für welche Straßen diese entrichtet werden müssen und wie eine Entrichtung möglich ist. Hierzu ist bevorzugt eine Menüauswahl vorgesehen, so dass der Fahrer zu den einzelnen, geänderten Verkehrsregeln jeweils eine Auswahl treffen kann. In einer bevorzugten Ausführung werden insbesondere geänderte Verkehrsregeln angegeben, die sich auf den rollenden Verkehr beziehen. In einer weiteren Ausführung können auch Verkehrsregeln bezüglich des ruhenden Verkehrs oder gegebenenfalls auch Informationen zu in dem zweiten Land geltenden, anderen Verkehrszeichen ausgegeben werden. In einer weiteren Ausführung kann zu einem vierten Ausgabeschritt 37 verzweigt werden, in dem Informationen über geänderte Verkehrsregeln akustisch an einen Fahrer des Fahrzeugs ausgegeben werden. Nach der akustischen Ausgabe wird zu einem Endschritt 38 verzweigt. Der Endschritt 38 wird auch dann erreicht, wenn ausgehend von dem Auswahlschritt 35 seitens des Fahrers keine weiteren Informationen mehr gewünscht werden. Ferner kann der Fahrer ausgehend von dem Auswahlschritt 35 sich die in dem zweiten Ausgabeschritt 34 ausgegebenen Hinweise auf geänderte Verkehrsregeln nochmals anzeigen lassen. In einer weiteren Ausführungsform kann der Fahrer von dem Auswahlschritt 35 auch einen Regelschritt 39 wählen, mit dem eine automatische Korrektur von Fahrzeugeinstellungen durchgeführt wird, so dass die Verkehrsregeln eingehalten werden.

In der Figur 3 ist ein Verfahren zur Überwachung des Einhaltens der Verkehrsregeln dargestellt. Ausgehend von einem Initialisierungsschritt 40 werden in einem Ermittlungsschritt 41 sowohl das Land, in dem sich das Fahrzeug befmdet, als auch die in dem Land jeweils geltenden Verkehrsregeln ermittelt. In einem anschließenden Prüfschritt 42 wird überprüft, ob die derzeitigen Fahrzeugeinstellungen und aktuell geltenden Fahrzeuggrößen im Rahmen der geltenden Verkehrsregeln liegen. Ist dies der Fall, so wird zu einer erneuten Überprüfung der Verkehrsregeln mittels des Prüfschritts 42 verzweigt. Ist dies nicht der Fall, so wird zu einem Warnschritt 43 verzweigt, in dem dem Fahrer über die Anzeige 3 oder den Lautsprecher 9 ein Hinweis darauf ausgegeben wird, dass eine Verkehrsregel gerade nicht beachtet wird. Der Fahrer hat dann die Möglichkeit, die Fahrzeugeinstellungen oder sein Fahrverhalten entsprechend zu korrigieren. In einer weiteren Ausführungsform ist es auch möglich, dass im Rahmen des Warnschritts 43 eine automatische Korrektur der Fahrzeuggrößen und/oder der Fahrzeugparameter durchgeführt wird.

Unter dem Ausdruck "Land" im erfindungsgemäßen Sinne ist einerseits ein Staatsgebiet zu verstehen. Mitunter gelten jedoch auch für Teilgebiete bestimmter Staaten besondere Verkehrsregeln. Der Ausdruck "Land" soll daher im erfindungsgemäßen Sinne als verwaltungspolitische Einheit verstanden werden, die einerseits sowohl lediglich auf Staaten, andererseits jedoch auch je nach Benutzerauswahl auch auf Teilgebiete dieser Staaten, wie z.B. auf Provinzen, Stadtgebiete, Landkreise oder ähnliche Abgrenzungen, bezogen sein soll.

In einer weiteren Ausführungsform kann die Zentraleinheit 2 einen Speicher 28 aufweisen, in der Verstöße gegen Verkehrsregeln erfasst werden. Zudem kann über den Speicher 28 in einer bevorzugten Ausführungsform die Lenkzeit des Fahrzeugs erfasst werden. Entsprechend einem Fahrtenschreiber ist somit eine Überwachung des Fahrers insbesondere für gewerblich genutzte Fahrzeuge möglich. Bei einer Verkehrskontrolle kann der Speicher 28 ausgelesen werden, so dass ähnlich der Überwachung einer Fahrtenschreiberscheibe eine Kontrolle möglich ist. Im Gegensatz zur Aufzeichnung eines Fahrtenschreibers werden nur dann Einträge vorgenommen, wenn tatsächlich eine Verkehrsregelüberschreitung vorliegt. In einer bevorzugten Ausführungsform wird dabei eine Warnung an den Fahrer ausgegeben, bevor ein entsprechender Eintrag in den Speicher 28 von der Zentraleinheit 2 vorgenommen wird.

## Patentansprüche

1. Verfahren zur Ausgabe von Verkehrsregeln, wobei ein Überschreiten einer Ländergrenze oder ein bevorstehendes Überschreiten einer Ländergrenze von einem ersten zu einem zweiten Land ermittelt wird, **dadurch gekennzeichnet, dass** Verkehrsregeln, die in dem ersten Land gelten, mit Verkehrsregeln, die in dem zweiten Land gelten, verglichen werden und dass nur diejenigen Verkehrsregeln ausgegeben werden, die sich zwischen dem ersten Land und dem zweiten Land unterscheiden und bei denen ein Fahrer vor oder mit Überschreiten der Ländergrenze Änderungen an seinem Fahrzeug in irgendeiner Weise vornehmen muss.

2. Verfahren nach einem der vorherigen Ansprüche, **dadurch gekennzeichnet, dass** die Verkehrsregeln derart rechtzeitig vor der Ländergrenze ausgegeben werden, dass eine Reaktion des Fahrers des Fahrzeugs auf geänderte Verkehrsregeln ermöglicht wird.

3. Verfahren nach einem der vorherigen Ansprüche, **dadurch gekennzeichnet, dass** zu den Verkehrsregeln Strafmaßnahmen abgelegt sind, mit denen Überschreitungen der Verkehrsregeln in dem jeweiligen Land geahndet werden.

4. Fahrerinformationsvorrichtung zur Ausgabe von Verkehrsregeln, mit einer Ortungseinheit (5) zur Bestimmung der Fahrzeugposition und zur Bestimmung eines Überschreitens oder eines bevorstehenden Überschreitens einer Ländergrenze von einem ersten zu einem zweiten Land, mit einer Speichereinheit (6) zum Ablegen von Verkehrsregeln für das erste und für das zweite Land, **gekennzeichnet durch** eine Recheneinheit (4) zum Vergleichen der Verkehrsregeln in dem ersten und in dem zweiten Land und **durch** eine Ausgabeeinheit (3, 9) zum Ausgeben nur derjenigen Verkehrsregeln, die zwischen dem ersten Land und dem zweiten Land unterschiedlich sind und bei denen ein Fahrer vor oder mit Überschreiten der Ländergrenze Änderungen an seinem Fahrzeug in irgendeiner Weise vornehmen muss.

5. Fahrerinformationsvorrichtung nach Anspruch 4, mit einer Schnittstelle (24) zur Übermittlung von auf die Verkehrsregeln bezogenen Daten an weitere Fahrzeugkomponenten zur Einstellung der Fahrzeugkomponenten (25, 26, 27) gemäß den Verkehrsregeln.

6. Fahrerinformationsvorrichtung nach einem der Ansprüche 4 bis 5, mit einer Warneinheit (3, 9) zur Ausgabe einer Warnung bei einem Verstoß gegen eine Verkehrsregel.

7. Fahrerinfonnationsvorrichtung nach einem der Ansprüche 4 bis 6, mit einer Schnittstelle (10), insbesondere einer Funkschnittstelle, zur Aktualisierung der gespeicherten Verkehrsregeln.

## Claims

1. Method for outputting traffic regulations, the crossing of an international border or an imminent crossing of an international border from a first country to a second country being determined, **characterized in that** traffic regulations which apply in the first country are compared with traffic regulations which apply in the second country, and **in that** only those traffic regulations which differ between the first country and the second country and for which a driver must carry out modifications to his vehicle in some way are output before or when the international border is crossed.

2. Method according to one of the preceding claims, **characterized in that** the traffic regulations are output in good time before the international border in such a way that the driver of the vehicle is permitted to react to changed traffic regulations.

3. Method according to one of the preceding claims, **characterized in that** punitive measures with which transgressions of the traffic regulations in the respective country are punished are stored for the traffic regulations.

4. Driver information device for outputting traffic regulations, having a locating unit (5) for determining the position of the vehicle and for determining the crossing or imminent crossing of an international border from a first country to a second country, having a memory unit (6) for storing traffic regulations for the first country and for the second country, **characterized by** a computing unit (4) for comparing the traffic regulations in the first country and in the second country, and by an output unit (3, 9) for outputting only those traffic regulations which differ between the first country and the second country and for which a driver must carry out modifications to his vehicle in some way before or when the international border is crossed.

5. Driver information system according to Claim 4, having an interface (24) for transferring data relating to the traffic regulations to other vehicle components in order to set the vehicle components (25, 26, 27) according to the traffic regulations.

6. Driver information system according to one of Claims 4 to 5, having a warning unit (3, 9) for outputting a warning when there is an infringement of a traffic regulation.

7. Driver information system according to one of Claims 4 to 6, having an interface (10), in particular a radio interface, for updating the stored traffic regulations.

## Revendications

1. Procédé pour délivrer des codes de la route, selon lequel on détermine un franchissement de frontière d'un pays, ou un franchissement précédent d'une frontière entre un premier pays et un deuxième pays,
**caractérisé en ce qu'**
on compare des codes de la route qui s'appliquent dans le premier pays à des code de la route s'appliquant dans le deuxième pays et
on ne délivre que les code de la route qui diffèrent entre le premier pays, et le deuxième pays et pour lesquels un conducteur doit réaliser des modifications au niveau de son véhicule d'une quelconque manière avant ou lors du franchissement de la frontière de pays.

2. Procédé selon l'une des revendications précédentes,
**caractérisé en ce que**
les codes de la route sont délivrés suffisamment longtemps avant la frontière du pays, de manière à permettre une réaction du conducteur du véhicule à des code de la route modifiés.

3. Procédé selon l'une des revendications précédentes,
**caractérisé en ce qu'**
ont associe aux codes de la route des mesures punitives, permettant de sanctionner des infractions aux codes de la route dans le pays respectif.

4. Dispositif d'information du conducteur pour délivrer des codes de la route, comprenant une unité de localisation (5) pour la détermination de la position du véhicule et pour la détermination d'un franchissement ou d'un franchissement précédent d'une frontière entre un premier et un deuxième pays, une unité de mémorisation (6) pour enregistrer des codes de la route pour le premier et pour le deuxième pays,
**caractérisé par**
une unité de calcul (4) permettant de comparer les codes de la route dans le premier et dans le deuxième pays, et
une unité d'émission (3, 9) permettant de délivrer uniquement les codes de la route qui diffèrent entre le premier pays et le deuxième pays et pour lesquels le conducteur doit réaliser des modifications au niveau de son véhicule d'une quelconque manière.

5. Dispositif d'information du conducteur selon la revendication 4, comprenant une interface (24) pour transmettre des données relatives aux codes de la route à d'autres composants du véhicule afin de régler les composants du véhicule (25, 26, 27) conformément aux codes de la route.

6. Dispositif d'information du conducteur selon l'une des revendications 4 à 5, comprenant une unité d'avertissement (3, 9) pour l'émission d'un avertissement en cas d'infraction à une règle de conduite.

7. Dispositif d'information du conducteur selon l'une des revendications 4 à 6, comprenant une interface (10), en particulier une interface radio, pour l'actualisation des codes de la route mémorisées.
